# EUROPEAN PATENT APPLICATION

(11) **EP 1 320 038 A2**
(43) Date of publication of application: **18.06.2003**
(21) Application number: 02026027.9
(22) Date of filing: 21.11.2002
(51) Int. Cl.: G06F 17/30

(54) **Services for context sensitive flagging of information in natural language text and central management of metadata relating to that information over a computer network**

(30) Priority: 10.12.2001 US 20343
(71) Applicant: MICROSOFT CORPORATION, Redmond, Washington 98052-6399 (US)
(72) Inventor: Bergstraesse, Thomas, Kirkland, Washington 98033 (US); Hohmann, Ulrich, Kirkland, Washington 98033 (US); Hough, Paul James, Foxrock, Dublin 18, County Dublin (IE)
(74) Representative: Grünecker, Kinkeldey, Stockmair & Schwanhäusser Anwaltssozietät

(57) **Abstract**

Natural language (NL) text entered by a user in a document is recognized as corresponding to a tag, causing an action or action associated with the tag to be implemented in the document. Linguistic information, tags, and related actions are managed in a centralized catalog from which they can be accessed. An NL Parser called by a tag recognizer analyzes and normalizes the text using semantic information and returns a parse tree to the tag recognizer. The tag recognizer then compares the parse tree to a corresponding parse tree provided in a dictionary. If a match is found, an instance or tag related to the parse tree in the dictionary is returned to an application in which the document is open to carry out the action associated with the tag. If an ambiguity causes multiple matches to be returned, the user can select one of the instances and related action.

## Description

### Field of the Invention

This invention generally relates to the use of a context-sensitive action provided in response to input by a user within a document, and more specifically, relates to the recognition of text in a document as corresponding to a tag associated with a predefined action that is then implemented in the document, wherein both tags and actions associated therewith are described by metadata and central managed in a dictionary structure.

### Background of the Invention

With the release of Microsoft Corporation's Office XP™ business productivity software, users of the word processing, spreadsheet, and other productivity applications included therein have been provided a much more efficient way in which to access information and options. When the user selects a specific type of element in a document that is open in one of these productivity applications, a menu of options is displayed to the user. For example, if a user moves a cursor over a person's name in a word processing document, a plurality of optional actions associated with the name are displayed in a menu. These options include sending an email to the person, scheduling a meeting with the person, adding the person to a list of contacts, etc. The user can then select one of the displayed options, causing the selected option to be implemented. The automated functionality that is thus associated with specific elements or actions within a document produced by an Office XP™ productivity application is referred to by the term "Smart Tag." Commonly assigned U.S. Patent Application, SN 09/588,411, entitled METHOD AND SYSTEM FOR SEMANTICALLY LABELING STRINGS AND PROVIDING ACTIONS BASED ON SEMANTICALLY LABELED STRINGS, filed on June 6, 2000, discloses an invention generally consistent with Smart Tags as used in Office XP™.

While Smart Tags as thus implemented in the above-noted business software programs provide significant advantages, there are several drawbacks in attempting to expand this functionality to an enterprise-wide and/or Internet-scale capability so that the functionality extends outside the desktop implementation currently limiting the scope of the Smart Tag concept. An example that subsequently is used to show how the present invention is implemented will help to clarify the limitations of Smart Tags as previously implemented in Office XP™ and the ability to enable enterprise-wide interaction with text entered in a document that is desired.

In Microsoft Corporation's Excel™ Spreadsheet Program, a popular Expense Report template is provided for implementing expense account reporting. A portion of a partially completed Expense Report produced with this template is shown below in Table 1. A user can employ this template for entering amounts that were spent for business related expenses such as travel, lodging, and meals so that the expense account thus produced can be submitted for approval to a manager and then to an accounting department of the business employing the user. Although the meanings of most of the fields indicated in the template are generally self-evident, meaning of other fields in the template (such as "Air Fare only") are less apparent to a user as an indication of the information that must be entered to produce an acceptable expense report. Actually, these field names are *hints* for an upload program that might be used by the local system hosting the Excel Spreadsheet Program. For example, the hints might enable the upload program to associate the expense receipts - represented by the user-entered data in the Excel spreadsheet rows and cells to general ledger Codes hosted, for example, inside a company's SAP finance system. (Note that SAP is a popular enterprise resource management system available from SAP AG).

**TABLE 1:**

| Partial Expense Report | | | | | | | |
|---|---|---|---|---|---|---|---|
| Date | Description of Expense | Air Fare Only | Other Travel & Lodging | Meals | Conference & Seminar | Misc | Code |
| 2/5/2001 | Flew to Seattle | 1,500.00 | | | | | |
| 2/6/2001 | Dinner with Applic. | | | 150.00 | | | |

If a user cannot associate an expense with an existing Excel column in this template, the Expense Sheet lists a number of typical expenses from which the user may choose, and the user must identify the class of expense and associate the number in the Code field provided in the above table. An example is an expense for cell phone usage. The user must enter the amount of the expense in the Misc. field and enter the appropriate value into the Code field. If the expense cannot be classified by the user, an appropriate intranet Website might be consulted in order to identify the right expense type for the system to associate the correct general ledger Code with the expense. Table 2 lists exemplary expense descriptions and the general ledger Code that is associated with each type of expense. It must be emphasized that the expenses and Codes shown below are for illustration only, to show the problems that a user must manually address in properly completing one field of the Expense Report template.

**TABLE 2:**

| **SUMMARY OF EXPENSES** | | |
|---|---|---|
| **1** | Phone/FAX | 742000 |
| **2** | Emp Morale | 721002 |
| **3** | Admin Services Misc. | 740008 |
| **4** | Cell Phone/VTC | 742001 |
| **5** | Computer Services | 740000 |
| **6** | Dues & Subscriptions | 721012 |
| **7** | Employee Dev and Training | 725001 |
| **8** | ISDN / ADSL Usage Expenses | 742002 |
| **9** | Postage | 752000 |
| **10** | Reference Material | 728007 |
| **11** | Supplies-General | 728002 |
| **12** | Recruit-Travel | 722003 |
| **13** | Recruit-Meals | 722004 |
| **14** | Recruit-Miscellaneous | 722014 |
| **15** | Computer Supplies & Equipment | 728004 |
| **16** | Gift Certificates/Tangible Gifts | 721002 |
| **17** | Conferences, Seminars, Training-Meals | 725003 |
| **18** | Other | |

The Expense Report spreadsheet template greatly simplifies the process of reporting expenses. However, it requires a fair amount of understanding by the user who is entering the expenses, and the Excel Spreadsheet Program doesn't participate actively to simplify the user's experience in completing an Expense Report defined by this template.

The task of completing an Expense Report could be greatly simplified if the template were annotated with Smart Tags that would automatically associate the expense description provided by a user with the correct general ledger (GL) Code and enter the GL Code in the proper cell of the Expense Report spreadsheet. To accomplish this task, the description entered by the user would need to be related to a corresponding standard GL expense description like those shown in Table 2. Moreover, instead of displaying the GL Code to the user, it would be desirable to display only the GL Description, while hiding the Code that is associated with the GL Description in a cell of the Expense Report that is not visible to the user. Table 3 shows a result for a portion of such an Expense Report. The portion of the Expense Report shown in Table 3 corresponds to that of the manually created Expense Report shown in Table 1. The GL Code should be returned and inserted into the Expense Report in a hidden cell, so that it is available when processing the Expense Report. By automating the determination of the GL Code that corresponds to the Expense entered by the user, the need to refer to Table 2 to determine the GL Code manually will be avoided. Also, the GL Codes should each include a descriptive word or phrase that is displayed to the user so that the user can confirm that the correct GL Code has been inserted.

**TABLE 3**

| **Desired Automated Entry of GL Code** | | | | | |
|---|---|---|---|---|---|
| **Date** | **Description of Expense** | **Country** | **Amount** | **GL Descript.** | **GL Code** |
| 2/5/2001 | Flew to Seattle | US | $ 1,500.00 | Recruit-Travel | 722003 |
| 2/6/2001 | Dinner with Applicant | US | $ 150.00 | Recruit-Meals | 722004 |

Currently, the Smart Tags function provided in the productivity applications of Office XP™ are designed to essentially run within a user's desktop computing environment. To implement a Smart Tag solution in accord with the approach currently provided in Office XP™ would require that programmers specifically develop a Component Object Model (COM)-enabled Dynamic Link Library (DLL) that would recognize the expense descriptions entered by the user and provide an action handler that would put the GL Code and Description into the right spreadsheet cell. Moreover, this DLL would have to be delivered to all desktops using the expense solution, which would involve a major deployment effort. Furthermore, the user community would have to be trained to type the descriptions in a specific format, so that the recognizer Code would be able to derive the correct associations. A disadvantage of implementing such a solution would be the loss of control and uniformity of the templates and related tags within an enterprise or from a complex Internet site such as Microsoft Corporation's MSN Web site. Also, such a solution would pose major challenges with respect to management of changed conditions, and in facilitating expansion to include further scenarios. To address these problems, an approach is needed that associates Smart Tags with a template and schema that are maintained centrally on a server accessible by users over a network or via the Internet.

It would therefore be preferable to create and maintain a centrally accessible catalog of Smart Tags and associated actions and a dictionary including the linguistic concepts related to text entered by a user, both of which are contextually dependent upon a user and/or the role of a user accessing a document and its associated Smart Tags. A server can maintain user profiles and centrally manage a catalog and dictionaries for Smart Tag enabled documents.

Several problems remain, regardless of how the functionality desired is achieved, however. The example in Table 3 shows one problem that would have to be addressed to implement this capability. In this example, the user has entered a past tense verb form phrase (i.e., "Flew to Seattle") in describing one of the expenses. Handling such linguistic variants would involve substantial programming effort. Developing a linguistic-sensitive content recognition requires significant investment, and doing so for each such application or template would typically be considered nonrecoverable investment. Accordingly, it will be apparent that a different approach is required to provide Smart Tags that are useful in an enterprise-wide context instead of being limited to predefined information within a business application.

There are clearly numerous applications for such a capability. Expense reporting is one example of the many business or consumer applications that can make use of such services. Examples of other applications of this functionality include order entry, material management, task management, and similar tasks in which textual descriptions can readily be related to a well defined taxonomy and ultimately, to a set of pre-defined system action.

### Summary of the Invention

One aspect of the present invention is directed to a method for automating actions that exhibit behaviors in a document, based upon text entered in the document by a user. As used herein and in the claims that follow, the term "document" is broadly intended to encompass any file created by a user or accessed by a user in which the user is able to enter text. Also, the term "text" as used herein and in the claims is broadly intended to encompass alphanumeric characters and/or symbols that are entered in a document by a user, employing any type of user interface suitable for making the entry. The text entered by the user is parsed using a Natural Language (NL) Parser to produce a parse tree that is employed to recognize key words and key phrases that are included in the text entered by the user. In addition, synonyms of the key words recognized in the text entered by the user are also identified. The key words, synonyms, and key phrases that are identified are compared to words and phrases included in a predefined dictionary. This dictionary is preferably maintained on a server computer that is coupled in communication with a client computer on which the user is accessing the document, but it is also contemplated that the method might also be implemented entirely on the user's computer, if the dictionary is loaded with the document. Preferably, the instances and actions are communicated in a markup language format to the client computer from the server computer, over a network.

An "instance" is returned for any corresponding match between a key word or synonym and a corresponding word in the dictionary, or between a key phrase and a corresponding phrase in the dictionary. Any instance that is thus identified by such a match is returned to the user (or to the application in which the document is open), causing a action associated with the instance that was returned to be implemented in the document.

If multiple instances are returned due to some ambiguity in matching the text entered with the dictionary, the multiple instances are displayed to the user to enable the user to select one of the multiple instances so that a action associated with the instance selected by the user is implemented in the document. For example, the action associated with the instance that is returned may cause an entry related to the text entry by the user to be made in a defined portion of the document.

Preferably, the dictionary and the actions associated with the instances are contextually predefined. For example, different instances and associated actions can be included for each different class of user accessing the document. Or, if the document is an Expense Report, as in the above discussion, one set of instances and associated actions might be provided in the document as an employee fills in the Expense Report, and another set of instances and associated actions may be provided when a manager reviews the Expense Report submitted by the employee. In addition, different instances and associated actions can be included for each of several different types of document that can be opened in a productivity application. Thus, the instances and related action provided for enabling a user to complete a time card document might be different than the instances and related actions provided in connection with the same user completing an Expense Report. Typically, the document will be defined using a template or schema with which the dictionary is associated.

The step of parsing the text preferably comprises the step of applying natural language grammar rules to the text entered by the user to identify the key words and key phrases. A recognizer applies the grammar rules to the output of the NL Parser to identify a head noun or head verb, and checks for synonyms of the head noun or head verb, as well as identifying compound nouns and adjectives modifying the noun, or prepositional phrases modifying the head noun or verb.

Preferably, each instance is associated with a descriptive word or phrase. If multiple instances are returned to the user, it is particularly helpful to display the descriptive word or phrase to the user for each instance that is returned, to enable the user to select one of the instances. Also, the user may more readily confirm even a single instance that is returned, prior to the application implementing the action associated with the instance.

It is contemplated that the user be enabled to add additional words and phrases associated with specific instances to the dictionary to create a user lexicon. This function will provide greater flexibility in customizing the instances provided in a dictionary to a particular user or class of users.

Another aspect of the present invention is directed to a medium having machine readable instructions for carrying out the steps of method, generally as described above. Yet another aspect of the invention is directed to a system for automating actions in a document, based upon text entered in the document by a user. The system includes a user input device enabling text input by a user, a display on which the document is displayed, a memory in which a plurality of machine instructions are stored, and a processing device coupled to the user input device, the memory, and the display. The processing device executes the machine instructions, to carry out a plurality of functions that are generally consistent with the steps of the method described above. Preferably, a server that includes at least a memory and a processing device stores the dictionary and provides it to the client when a user opens a document provided with this functionality in an application.

### Brief Description of the Drawing Figures

The foregoing aspects and many of the attendant advantages of this invention will become more readily appreciated as the same becomes better understood by reference to the following detailed description, when taken in conjunction with the accompanying drawings, wherein:
FIGURE 1 is a block diagram of an exemplary system for a general purpose computing device in the form of a conventional personal computer (PC) suitable for implementing the present invention;
FIGURE 2 is a block diagram illustrating functional components of the present invention that are implemented on a client computer for an exemplary illustration of the present invention;
FIGURE 3 is an example of a dialog that is used to define linguistic components that are included in a dictionary employed in the present invention;
FIGURE 4 is a schematic block diagram showing exemplary functional components on a server used in the present invention;
FIGURE 5 is a functional block diagram showing the relationship between functional components employed on a client and a server in the present invention;
FIGURE 6 is a flow chart illustrating the logical steps carried out in creating a catalog of Smart Tags for use in the present invention;
FIGURE 7 is a flow chart illustrating the logical steps that are carried out to automatically implement an action in a document using Smart Tags in accord with the present invention.

### Description of the Preferred Embodiment

### Exemplary Operating Environment

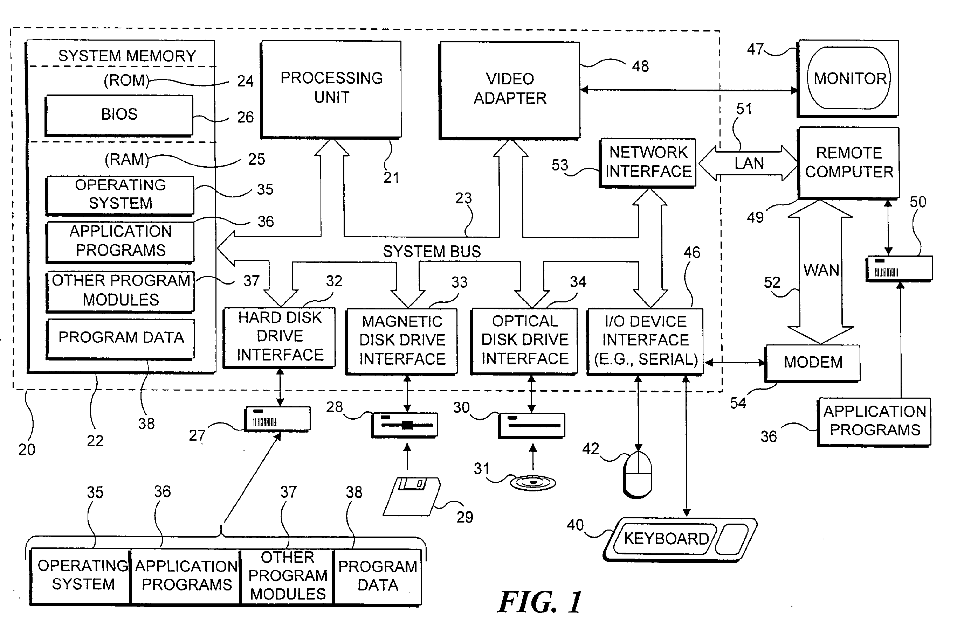

FIGURE 1 and the following discussion provide a brief, general description of an exemplary computing environment that can be used for implementing the present invention. The functions for implementing the invention are defined by computer executable instructions, such as program modules, that are executed by a personal computer (PC) or other computing device. Generally, program modules include application programs, routines, objects, components, functions, data structures, etc. that perform particular tasks or implement particular abstract data types. Also, those skilled in the art will appreciate that in addition to PCs, this invention may be implemented using other microprocessor-based or programmable electronic devices, multiprocessor systems, network workstations, minicomputers, mainframe computers, and the like.

With reference to FIGURE 1, an exemplary system usable to practice the present invention includes a general purpose computing device in the form of a conventional PC 20, provided with a processing unit 21, a system memory 22, and a system bus 23. PC 20 may be operated as a server on which the present invention is executed to create a plurality of proposals for making appointments, and the proposals can then be accessed over a network, such as the Internet, to make appointments. The system bus couples various system components including the system memory to processing unit 21 and may be any of several types of bus structures, including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help to transfer information between elements within PC 20 such as during start up, is stored in ROM 24. PC 20 further includes a hard disk drive 27 for reading from and writing to a hard disk (not shown), a magnetic disk drive 28 for reading from or writing to a removable magnetic disk 29, and an optical disk drive 30 for reading from or writing to a removable optical disk 31, such as a CD-ROM or other optical media. Hard disk drive 27, magnetic disk drive 28, and optical disk drive 30 are connected to system bus 23 by a hard disk drive interface 32, a magnetic disk drive interface 33, and an optical disk drive interface 34, respectively. The drives and their associated computer readable media provide nonvolatile storage of computer readable machine instructions, data structures, program modules, and other data for PC 20. Although the exemplary environment described herein employs a hard disk, removable magnetic disk 29, and removable optical disk 31, it will be appreciated by those skilled in the art that other types of computer readable media which can store data that are accessible by a computer, such as magnetic cassettes, flash memory cards, digital video disks (DVDs), Bernoulli cartridges, RAMs, ROMs, and the like, may also be used in the exemplary operating environment.

A number of program modules may be stored on the hard disk, magnetic disk 29, optical disk 31, ROM 24, or RAM 25, including an operating system 35, one or more application programs 36, other program modules 37, and program data 38. A user may enter text and commands into PC 20 through input devices such as a keyboard 40 and a pointing device 42. Pointing device 42 is preferably a mouse, although other types of user input devices such as a track ball, a joystick, or a stylus can instead be used. Other input devices (not shown) for PC 20 may include a microphone, a game pad, a satellite dish, a scanner, or the like. These and other input/output (I/O) devices are often connected to processing unit 21 through an I/O device interface 46 that is coupled to system bus 23. The term I/O device interface is intended to encompass each interface specifically used for a serial port, a parallel port, a game port, a keyboard port, a PS/2 port, and/or a Universal Serial Bus (USB) port. A monitor 47 or other type of display device is also connected to system bus 23 via an appropriate interface, such as a video adapter 48, and is usable to display elements and documents of application programs, Web pages, and/or other information, including documents that are provided with Smart Tags, in accord with the present invention. In addition to the monitor, PCs are often coupled to other peripheral output devices (not shown), such as speakers (through a sound card or other audio interface (not shown)) and printers.

PC 20 operates in a networked environment, using logical connections to one or more remote computers, such as a remote computer 49. Remote computer 49 may be another PC, a server (which is typically generally configured much like PC 20) that is used to implement the present invention, a network workstation, a peer device, a PCA, a cell phone, a network connection device, or a satellite or other common network node, and may include many or all of the elements described above in connection with PC 20, although only an external memory storage device 50 has been illustrated in FIGURE 1. The logical connections depicted in FIGURE 1 include a local area network (LAN) 51 and a wide area network (WAN) 52. Such networking environments are common in offices, enterprise-wide computer networks, intranets, and for coupling to the Internet.

When used in a LAN networking environment, PC 20 is connected to LAN 51 through a network interface or adapter 53. When used in a WAN networking environment, PC 20 typically includes a modem 54, or other means for establishing communications over WAN 52, which may include the Internet. Modem 54, which may be internal or external, is connected to the system bus 23 or coupled to the bus via I/O device interface 46, i.e., through a serial port. In a networked environment, program modules depicted relative to PC 20, or portions thereof, may be stored in the remote memory storage device. It will be appreciated that the network connections shown are exemplary and other means of establishing a communications link between the computers may be used, such as wireless communication and wideband network links.

### Definition of Key Terms:

The following terms, which are used throughout this description and may appear in the claims that follow, have the following meanings.

**Task -** A business or user job that is performed in a specific context (user role, application, environment).

**Productivity Application** - A tool or software program that is used to perform a task and which involves the input of information (test, selection, etc.).

**Tag Recognizer** - A component with a well defined application program interface (API), which is called by the productivity application to evaluate tags and to register actions for tags that are recognized by the component.

**Tag Action** - A component which is called by the productivity application if the user hovers over a recognized tag.

**Natural Language Parser** - A software component that parses human readable text and translates the text into an internal normalized structure that can be processed by software applications. Parsing and translation is based on semantic information that defines the vocabulary the natural language Parser recognizes.

**Dictionary/Semantic Model -** A vocabulary definition that includes terms, relationships between the terms, synonyms, etc.

**Web Services** - Processing logic that enables client components to store and retrieve data such as profile information, tag definitions, and semantic information from a backend system using standard Internet protocols.

**Tag Catalog** - A database of tag definitions including semantic models, and action or actions associated with tags.

**Directory Store -** A database of profile information about users.

**Semantic Editor** - A graphical editor employed to develop semantic models comprising entities, relationships, attributes, and annotations.

**Semantic Modeling Format (SMF)** - An eXtended Markup Language (XML) format employed to express semantic models.

### Exemplary Application of the Present Invention

An exemplary application of the present invention that helps to illustrate how it is used in a very simple manner is discussed below. In this example, the use of Smart Tags for carrying out actions in a document is disclosed in connection with a spreadsheet opened in Microsoft Corporation's Excel™ Spreadsheet Program. However, it must be strongly emphasized that the present invention is not in any way limited to use in a spreadsheet program and the actions that can be implemented are not limited to the specific one discussed below. Instead, the present invention has general application to almost any productivity application document in which a user may enter text and in which the context, e.g., the user's identity, the user's role, and the type of document that is opened, can directly effect the action that is carried out in response to text entered by a user.

The following explanation regarding an exemplary application of the present invention to automatically entering GL Codes in the appropriate cells of an Expense Report spreadsheet expands upon the discussion provided in the Background of the Invention section above. As noted therein, it would be very helpful to enable an expense description entered by a user to automatically cause a corresponding GL accounting Code to be entered into an Expense Report being completed by the user. It will be evident that there are many types of expenses that a user might enter in an Expense Report and that a user might enter the text describing an expense using a variety of different words, and in different grammatical forms. Accordingly, it is important that the present invention be able to deal with the variety of expressions that might be entered by a user in the description field of the Expense Report, and having evaluated the text entered by the user, provide one or more GL Codes that match the expense as described by the user.

As shown above in Table 3, the user has entered the description "Flew to Seattle." In response, the present invention causes the spreadsheet program to display the GL Description "Recruit-Travel." In addition, it enters the GL Code "722003" in an adjacent hidden cell of the Expense Report so that when the Expense Report is submitted, the expense can be properly allocated by the accounting department of the business (or by an automated accounting module). A similar action is implemented in regard to the entry by the user of the expense description "Dinner with Applicant." In this simplified example in Table 3, only two entries are shown; however, it will be apparent that the same process can be implemented for each of many different expense entries made by the user. Further details of the process carried out by the present invention to accomplish this function (and many other types of functions) are disclosed below.

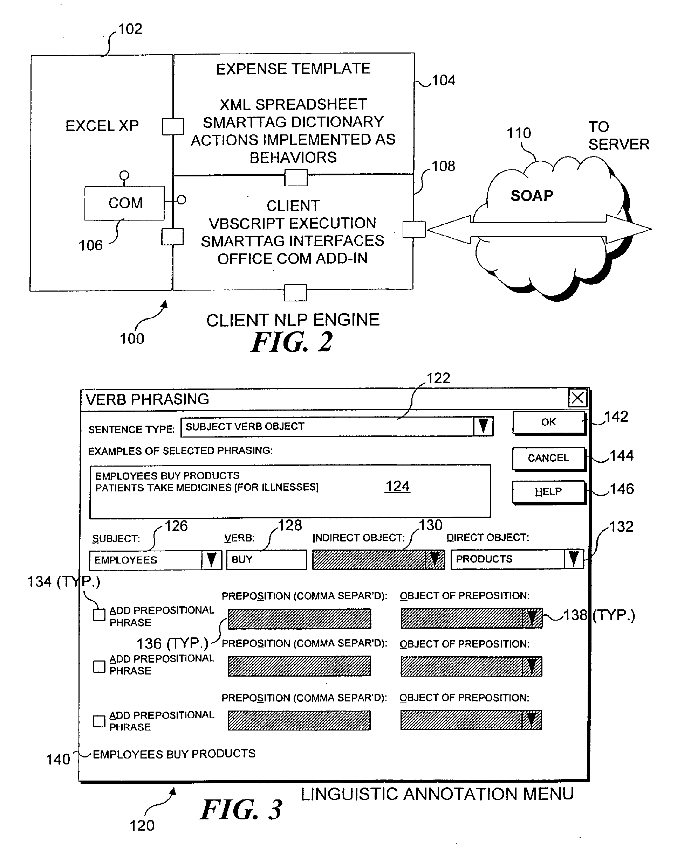

The software components that are executed on a client computing device that is employed by the user to make an entry into a productivity application are shown in FIGURE 2. In this figure, a client computer 100 is executing Microsoft Corporation's Excel XP™ Spreadsheet Program 102, which enables the user to open an Expense Report template or schema that is provided with Smart Tags functionality in accord with the present invention. Typically, the Expense Report template will be obtained from a server (not shown in this figure) to which client computer 100 is connected and with which it is communicating over a network. The network can be an enterprise LAN, WAN, or the Internet, as well as other types of public networks. Client 100 obtains an Expense Report template 104 from the server computer that includes an XML spreadsheet with fields predefined for the Expense Report, and its associated Smart Tag dictionary. The Smart Tag dictionary is transferred to the client computer with the document template, but is maintained on the server.

Also associated with the Expense Report template is the context in which it is being used, including the identity and the role of the user that has opened the spreadsheet. The actions that are implemented using the Smart Tags associated with the template are determined by the context in which the document is being accessed. To facilitate the present invention, client computer 100 executes client modules 108 that provide for execution of a Visual Basic™ (VB) script that is used for implementing actions associated with the Smart Tag. However, it should be understood that other programming languages, such as Java, could instead be used. Microsoft Corporation's Office™ Computer Object Model (COM) module 106 is included to implement the present invention within the application program executed by client 100 and to access the document template or schema in which Smart Tags are provided. In the simple example discussed herein, the document is created in a spreadsheet Expense Report template, and the action that is implemented by the spreadsheet program in response to a text entry made by the user in a specific field of the spreadsheet, i.e., the expense description field, is to display and enter the GL Description (visible) and the GL Code (hidden) associated with the expense type that is determined by recognizing the text entered by the user. Clearly, many other types of actions might be implemented in response to text that is entered in a specific portion of a document, and the document need not be a spreadsheet. In addition, the context sensitivity associated with the type of document, identity of the user, role of the user, and other context-sensitive parameters can greatly affect or control the actions that are implemented in response to Smart Tags within the document template.

While it is contemplated that other techniques can be used for recognizing text entered by a user, in the simple example of the present invention discussed herein, client 100 employs a natural language recognizer to recognize phrases or words entered by the user in a document in order to perform actions related to the entries. The natural language recognizer is implemented as a VB Active-X Direct Link Library (DLL) module that calls the interfaces "ISmartTagRecognizer" and "ISmartTagAction." This Active-X DLL calls a second or helper DLL that is implemented as a C⁺⁺ Active Template Library (ATL) DLL, which provides a low-level interface to a NL Parser and a Thesaurus that is included with Office XP™. The second or helper DLL exposes a Parser object with methods for initialization, shutdown, parsing, and for returning synonyms of the words entered by the user to facilitate their recognition.

Each cell in which the user enters text is passed to client 100 through the Smart Tag interfaces noted above and identified, as explained below. If the text was entered in the description column of the Expense Report spreadsheet template (for the exemplary application of the present invention), the client passes the contents entered in the cell to the NL Parser engine that is provided in Microsoft Corporation's Office XP™ (for general spelling and grammar checking). The NL Parser engine returns a normalized tree of the words entered by the user. Client 100 then compares the normalized tree with words and synonyms that are included in the dictionary that was downloaded with the template/document from the server to identify the correct expense GL Code. Once the GL Code is identified, an action handler is invoked and a GL Description and GL Code are entered into the proper spreadsheet cells in accord with the downloaded action corresponding to the Smart Tag returned in response to the text entered by the user in the expense description field. Although the template, dictionaries, and other necessary modules and functionality could be completely contained on client 100, they are preferably downloaded from the server to which client 100 is connected, preferably using Simple Object Access Protocol (SOAP) 110. This protocol, which is message-based, employs XML for accessing services on the Web.

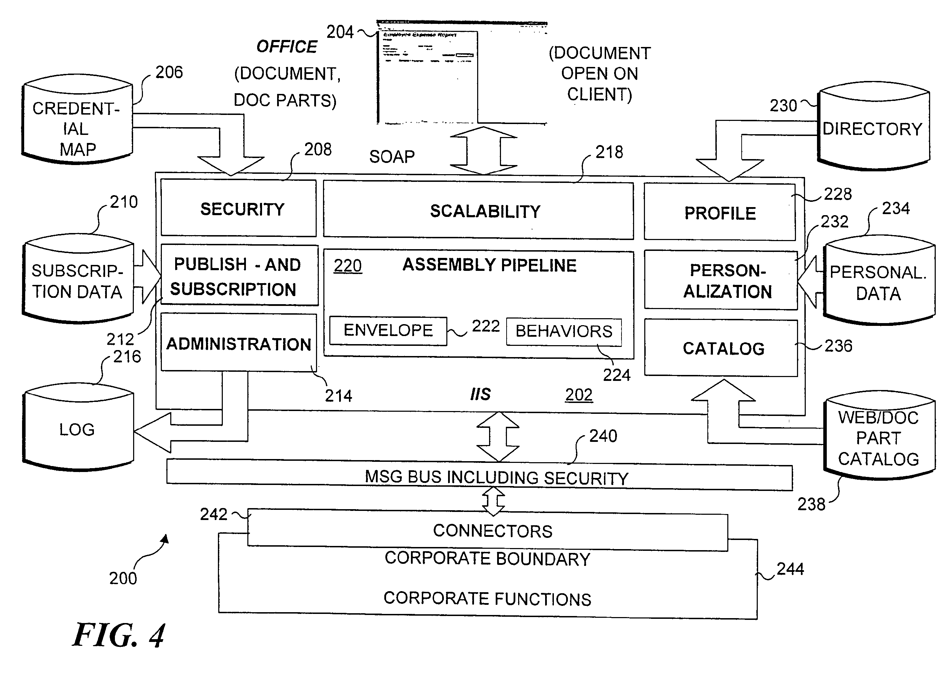

As noted above, a server provides the rich centrally controlled and maintained environment that facilitates context-sensitive recognition of text entered by a user in a Smart Tag enabled document and provides the action associated with the recognized text corresponding to a Smart Tag. FIGURE 4 illustrates a server 200 used to carry out this function, in terms of its functional components. In this disclosed embodiment, server 200 is implemented as an Internet information server (IIS) 202 application. Communication between the client computer in regard to a document 204 that is accessed by the user and server 200 via SOAP gives the client access to several services that are employed in implementing the present invention and access to related data maintained on server 200.

Initially, when the user signs on to the network that is coupled to server 200, credential map data 206 is used by a security module 208 to determine the user's access rights. Presumably, the user will have rights to access a template for the document, enabling the Smart Tags feature in accord with the present invention to be provided to the user with the template. A profile for the user in a module 228 is accessible from a directory 230. In addition, personalization data 234 are provided to a personalization module 232 to facilitate user-specific parameters relating to access of the template and the manner in which it is implemented. For example, one type of personalization might involve enabling a user to create a custom user lexicon to supplement the enterprise-wide dictionary that is associated with the document template in a specific context. The reference to such a user lexicon would be stored in personalization data 234. A Web/document part catalog 238 provides input to a catalog module 236, which enables access by the user of the various Smart Tag enabled templates for downloading to the client computer. An administration module 214 maintains a log 216 that lists changes in the state of each document as it is processed by a user and by other users who access the document over the enterprise Web. Also included is a publish and subscription module 212 that employs subscription data 210 for determining how any document prepared by a user is published for access by other users on the enterprise Web. A scalability module 218 is included that provides services like caching common data to improve overall throughput of the service. When requested, server 200 uses an assembly pipeline 220 to assemble an envelope 222 that includes actions 224, which are associated with a template. Server 200 is coupled to other functionality within the enterprise through a message bus 240 that includes security functions. The message bus couples the server through connectors 242 to other corporate functions 244 within the corporate boundary. Details of these other corporate functions provide the target for Smart Tag actions and do riot pertain to the present invention; therefore, they are not explicitly described.

A dictionary is a key component used in the present invention for determining an appropriate instance of a Smart Tag to return to a user in order to implement a action in a document. The dictionary is created in a preferred embodiment using a Semantic Model Editor (SME) tool (not shown), which provides a graphic user interface for creating instances of Smart Tags corresponding to words and phrases that might be entered by a user so that actions associated with the Smart Tags can be implemented. Preferably, each instance that is returned to a user in response to recognition of a word or phrase entered by the user, will include a friendly description that is readily recognized by the user. Again, the descriptive word or phrase can be included when creating the dictionary using the SME. The SME includes graphic user interface (not shown) for enabling an operator creating the dictionary to enter entity properties for each semantic word or phrase to identify the type of word included in the dictionary, and to identify names that are displayed for each word or phrase.

FIGURE 3 illustrates a tool included in the SME, which is referred to an a linguistic annotation menu 120. In this menu, a dropdown list box 122 enables the operator to specify the sentence type, for example, a "subject verb object" type, or a "subject verb direct object" type, and various other combinations. A window 124 displays examples of selected phrasing involving the sentence type selected in dropdown list box 122. In a dropdown list box 126, the user selects from among a list of different subjects, and in a text box 128, enters a verb. Similarly, although grayed out since it is not included in the selected sentence type, the user is also provided with an indirect object dropdown list box 130 for those sentence types that include an indirect object. In this example, a dropdown list box 132 enables an operator to select a direct object from among a list of direct objects. Furthermore, up to three different prepositional phrases can be added by selecting a check box 134 for each phrase chosen, entering a preposition in the text box 136 and selecting an object of the preposition in a dropdown list box 138. A phrase 140 corresponding to the entries made in this menu is illustrated at the bottom of the menu. Conventional control buttons 142, 144, and 146, respectively enable the operator to enter the data just selected in the menu, cancel it, or request help.

The Smart Tag dictionary must contain a minimum of several kinds of information to enable recognition of text entered by a user. Specifically, the dictionary should contain the target or instance, which is returned upon recognition of a text entry by the user. For example, if the GL Code is the item of interest that must be inserted in the document, it will be returned when the expense description entered by the user that corresponds to that GL Code is recognized. The dictionary must contain a list of single words and multiword phrases associated with each instance. This list is used by the recognition algorithm to match a phrase entered by a user to determine an instance. As explained above in connection with FIGURE 3, an operator creates the phrase included in the dictionary by combining different grammatical forms. Optionally and preferably, the dictionary should also contain a "friendly name" or description for each instance, which is particularly helpful when the recognizer determines that the phrases for multiple instances match the text entry made by the user. In this case, the recognizer can present a list of the friendly names or descriptions of those instances that matched to enable the user to make a selection of the appropriate instance for use in carrying out the action associated with the selected instance. However, if such a description is not included in the dictionary, the actual instance is instead returned and displayed to the user. Preferably, the dictionary content is formatted in a compliant subset of the published SMF. This format enables existing and future authoring tools to be developed in the context of an enterprise query to create and edit the dictionaries, as explained above, and is relatively easy for an operator to use in authoring a dictionary.

A relatively simple example, at a minimal level, of a dictionary entry in SMF that is used for the Expense Report having Smart Tags in accord with the present invention is as follows:

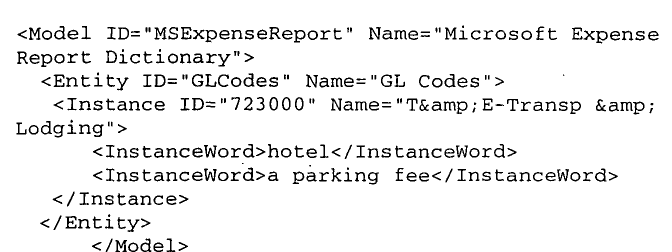

In the above exemplary Code, an XML node "Model" is used to identify the dictionary. The entity node is used to group together the various instances of GL Codes, and to specify a context associating the different phrases with their corresponding instances. This concept is readily expanded. For example, a dictionary could contain entities or "contexts" from multiple lines of business applications. In addition, there might be multiple entity nodes for each model.

The instance node and its InstanceWord children are the dictionary entries that the recognizer uses in recognizing text entered by a user. For example, as shown in the above Code, the instance ID "723000" is returned when the recognizer matches the user entered phrase to the phrase associated with this instance. The action handler uses the instance as a key into the dictionary or a related database to look up an entry, any associated data, and to perform actions. The InstanceName shown in the above example "T&E-Transp & Lodging" is the descriptive name for this instance.

InstanceWord nodes are used to list various words and phrases associated with an instance. There is one InstanceWord node for each word or phrase associated with an instance. The recognizer matches the text entered by the user against these words and phrases, returning the one or more instances that best match. In case of an ambiguity, the recognizer presents the ambiguous possible choices to the user for resolution. For example, in the above Code, the recognizer attempts to match phrases containing the compound noun "parking fee" as the head of the phrase that is matched to the instance.

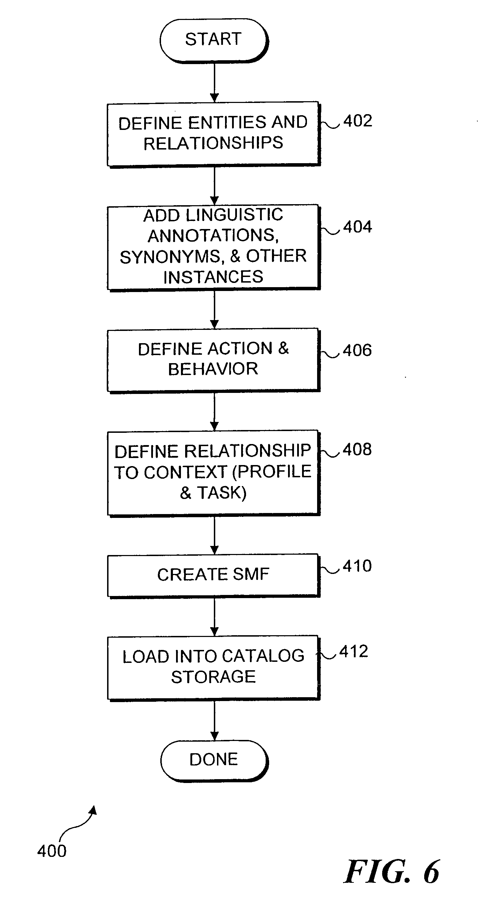

FIGURE 6 illustrates a flowchart 400 that shows the logical steps involved in creating a dictionary for a specific context used in implementing Smart Tags within a document. In a step 402 the operator defines the entities and relationships, generally as described above. In this step, the operator specifies the grammatical components of each phrase and their relationship to enable the phrase to be associated with a given instance. In a step 404, the operator adds linguistic annotations as appropriate, specifies synonyms for key words within the phrases that are associated with an instance, and optionally refers to other instances that are related.

A step 406 enables the operator to define the action and/or other actions associated with an instance that will be implemented if that instance is identified in connection with text entered by a user. In a step 408, the operator defines the relationship of the dictionary to a specific context. In this step, the user profile and the task that is being implemented play an important role, since the context can be determined on the basis of a specific user, a user role, or a particular type of document for which the Smart Tag dictionary is being created. In a step 410 the operator creates the SMF (i.e., in the preferred embodiment, creates the XML format representation of the information just determined relating to the entities and relationship that were defined. Next, the SMF that was created in the previous step, which may be context sensitive in terms, i.e., used for providing the appropriate dictionary in a given context, is loaded into a catalog storage in a step 412. Once these steps have been carried out for all instances in the dictionary, the step of creating and defining the components of the dictionary is complete.

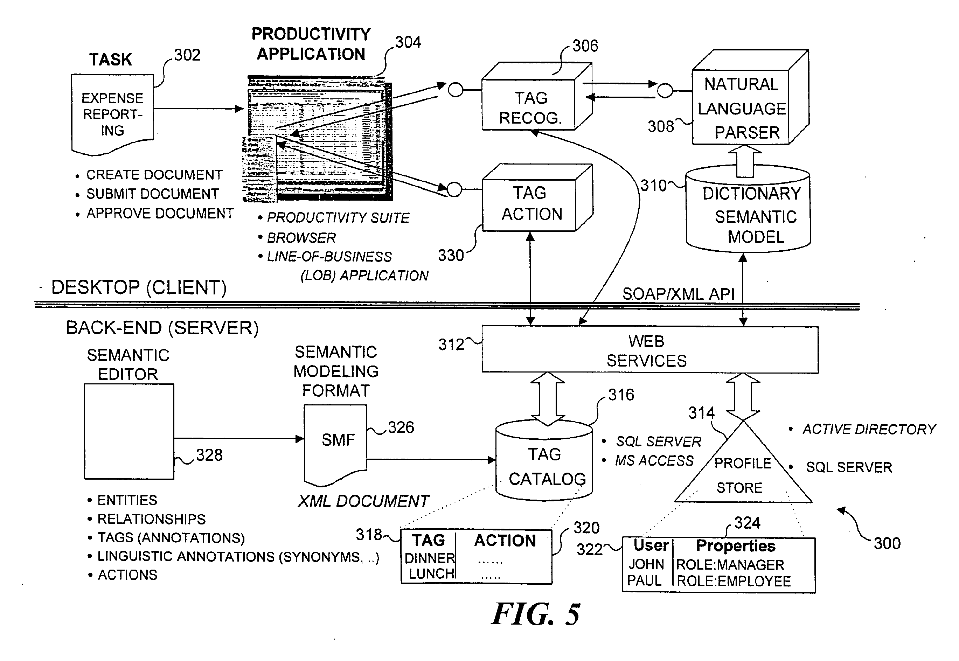

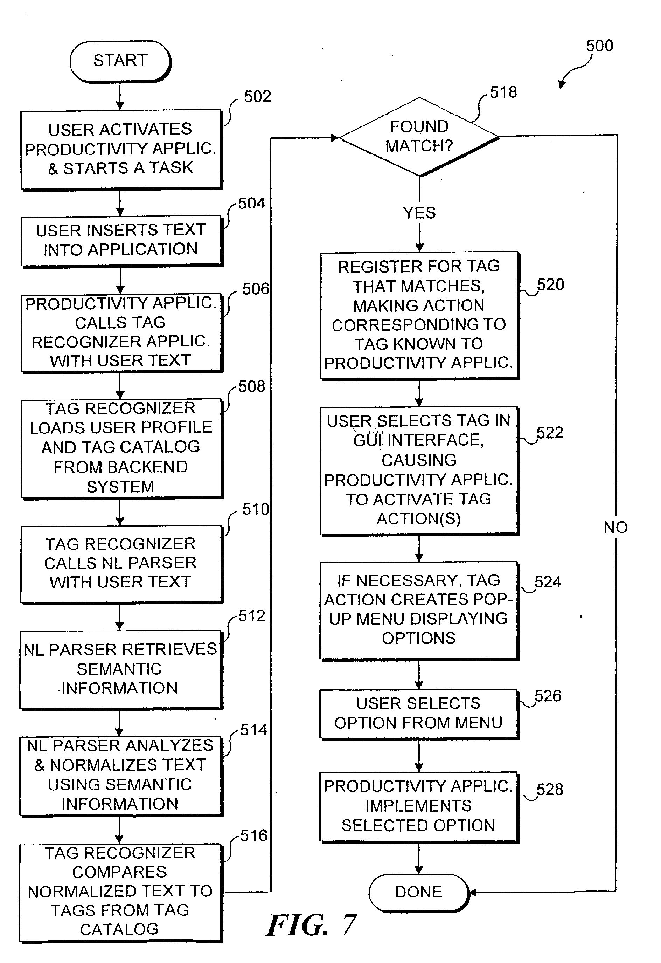

Details of the logical steps implemented by the present invention for recognizing text entered by a user are illustrated in a flow chart 500, shown in FIGURE 7. Also, a functional block diagram illustrating the functional steps implemented on the desktop or client computer, and at the backend on a server are shown in a block diagram 300 in FIGURE 5. The following discussion skips back and forth between FIGURES 5 and 7. FIGURE 5 is more specific to the exemplary application of the present invention for completing an Expense Report in the Excel™ Spreadsheet Program, while FIGURE 7 is more general in defining the steps implemented, regardless of the type of application or document involved. In a step 502 in FIGURE 7, a user activates a productivity application, such as Microsoft Corporation's Excel XP™ and starts a task, such as completing an Expense Report. A task 302 is illustrated in FIGURE 5. When Excel XP™ starts up the Expense Report template/document on the client computer, it finds that the template is Smart Tag enabled and calls an initialization procedure for the Smart Tag function that implements the present invention. During initialization, appropriate DLLs are loaded on the client computer, and a dictionary in SMF associated with the current context is downloaded from the server to the client computer.

FIGURE 5 illustrates a dictionary semantic model 310 that is transferred from the server through Web services 312. It is also contemplated that the dictionary could already reside on the client as part of the productivity application, or instead be provided by the server to the client during logon by the user, or as part of a document that is opened by the user in a productivity application 304, where the document is based on a schema or template embodying Smart Tags in accordance with the present invention. Also, during initialization, multiword phrases in the dictionary are preprocessed. Specifically, multiword phases in the dictionary are parsed, and a parsed tree produced by this process is added to the XLM Document Object Model (DOM) object representing the dictionary. However, it is preferable to do the preprocessing in a separate dictionary build step when the dictionary SMF file is created, so that the phrases in the dictionary need not be parsed during startup. For a relatively large dictionary, carrying out the parsing step when the document is loaded might unduly delay the startup performance of the documents within the productivity application.

After the user has opened the document within productivity application 304, the user inserts text into the productivity application at an appropriate point within the document in a step 504. In response, a productivity application calls a tag recognizer application with the user text, in a step 506. Specifically in the spreadsheet example, the contents of the cell are supplied to a Smart Tag recognizer as a string of alphanumeric characters. If an existing spreadsheet is opened, the Smart Tag recognizer is called on every cell, since state information concerning the status of user entered text is not maintained. Preferably, the type of productivity application is also indicated, for example, by providing a flag indicating whether the text was entered into the cell of a spreadsheet or within a paragraph of a word processing document.

Although currently, Microsoft Corporation's Office XP only permits a Smart Tag recognizer to be enabled or disabled for the Office applications at large and not on an individual productivity application basis, there is no provision for determining the context in regard to the specific document that called the Smart Tag recognizer. For the present simple example, it is preferable to reject recognition of any text entered by a non-spreadsheet application, since the dictionary that is loaded is specifically intended to be used with the Expense Report that is opened in the spreadsheet. In FIGURE 5, a tag recognizer 306 is shown receiving the strings that were inserted into a spreadsheet cell by the user.

Referring back to FIGURE 7, step 508 provides that the tag recognizer load a user profile and a tag catalog from the backend or server. As shown in FIGURE 5, a profile store 314 is maintained on the server managed by Active directory and optionally, by SQL Server, so that a dictionary specific to a particular user or user role context may be loaded. Tag catalog 316 provides an appropriate dictionary associating instances with actions in the context of the type of document, user, or role of the user. The actions included within a dictionary may differ depending upon the context of the dictionary. In the Expense Report example, there is clearly a difference in the user role of an employee who is filling out the Expense Report and a manager who is reviewing the Expense Report for the purposes of approving the expenses entered by the employee. The context sensitivity in regard to user profile is evident in profile store 314, which identifies users 322 in connection with their roles 324. Web services 312 provides the tag catalog and user context information to the productivity application through the tag recognizer.

In a step 510 in FIGURE 7, tag recognizer 306 calls the NL Parser with the user text received from the document. In FIGURE 5, NL Parser 308 retrieves the semantic information from the dictionary semantic model that was previously transferred from the server, corresponding to a step 512 in FIGURE 7. The Parser returns multiple parse trees, each tree corresponding to a different interpretation of the user input in XML format. The Parser is capable of returning either syntax trees or logical form trees. However, preferably, the logical form representation is used, since it simplifies parse tree comparisons. Nonessential words, such as articles "the" or "a," become bits in a logical form enabling the Parser to focus on comparing important key words in the phrase entered by the user with the phrases contained in the dictionary.

In a step 514 in FIGURE 7, the NL Parser analyzes and normalizes text entered by the user, employing the semantic information that identifies head nouns and head verbs. In a step 516, tag recognizer 308 compares the normalized text provided by the Parser with corresponding tags loaded from tag catalog 316, for the dictionary. As described previously, a semantic editor 328 will have been previously used to create each dictionary in an SMF 326. Examples of the data in the tag catalog that are shown in FIGURE 5 are tags 318 and corresponding actions 320.

A decision step 518 determines if a match was found between the normalized text and the tags provided in the tag catalog. If not, the process is complete. However, if a match was found, a step 520 provides for registering the tag that matches, making the action that corresponds to that tag in the tag dictionary known to the productivity application. This registration step is context-dependent, based upon the task, user, user role (from the user profile data), and the productivity application, among other parameters.

Referring back to FIGURE 7, a step 522 enables the user to select a tag in a graphic user interface menu, causing the productivity application to activate the tag action (or actions). In the example of the Expense Report, a user is presented with a description of a GL Code and if the user approves of the description that was returned by the tag recognizer, the user okays the action to be carried out. Furthermore, if due to an ambiguity, a plurality of potentially matching tags are returned by the tag recognizer, a pop-up menu displays the prospective tags to enable the user to select one in a step 524. In a step 526, the user selects an option from the menu. One of the options is, of course, to choose a listed tag to enable the action associated with the tag chosen to be carried out. Another option is to cancel the Smart Tag function, which the user would do if the proffered tags do not appear to match the text entry made in the document. If the user selects one of the tags from the menu, a step 528 causes the productivity application to implement the action associated with the selected option, which is indicated as a tag action 330 in Figure 5.

In the exemplary Expense Report application of the present invention, selection of a description for one of the tags or a single tag that is returned by the user would cause the corresponding GL Code to be inserted into the Expense Report. Many other types of actions can also be implemented besides simply inserting text within a spreadsheet cell. For example, specific types of actions might include printing a document, copying a portion of the document to a different document, or almost any other action that can be implemented using VB script or other Code. Once the action associated with the specific tag has been carried out, the process is completed.

As noted above, the tag recognizer is implemented using grammar rules that select certain key words out of the parse tree. These grammar rules are used to create XPATH (XML Path) language expressions using these key words, and an eXtensible Stylesheet Language (XSL) search is done on the dictionary. The search compares the parse trees for the phrase entered by the user in the document against the single words and preprocessed parse trees for multiword phrases in the dictionary, which are also in XML format.

The first grammar rule checks for head matches. In this process, a head noun or verb from the parse tree is used to do an XSL search in the dictionary for single words that match. The Parser stems words so that the match is actually done only on root forms of the words. For example, if the dictionary included the term "airfare," then a phrase entered by the user such as "domestic airlines airfare from Oakland to Seattle" would match the word in the dictionary based upon the head noun rule. As a further example, if the dictionary includes the key work "drive," then a phrase entered by the user such as "drove from airport to conference center" would match, based on the head verb rule. In order for matches to be detected, single words must be entered into the dictionary in a root uninflected form.

In addition to carrying out the preceding grammar rule, the process also uses the head noun or verb from the parse tree for the text entered by the user and looks up that word in a Thesaurus provided in Office XP™. The Thesaurus returns a list of synonyms for the word, which can be then used to look for corresponding SMF words in the dictionary that match. Use of synonyms in this manner enables a broader range of phrases entered by the user to be matched to those in the dictionary.

A second grammar rule checks for compound nouns and adjectives that modify nouns. This grammar rule is implemented to distinguish between entries such as "parking fee" and "conference fee." Both of these phrases have the same head noun "fee," but are distinguished by their modifying adjectives. Thus, they correspond to different GL Codes. The dictionary is then searched for a preprocessed parse tree that matches the head noun and the modifier adjective.

A third grammar rule checks for a head noun or verb that is modified by a prepositional phrase. The head noun or verb of the phrase and the head nouns of the prepositional phrase are compared for matches in the preprocessed parse trees that are included in the dictionary. This step enables the tag recognizer to distinguish between a text entry such as "charges for phone" and "charges for cell phone." In addition, the third grammar rule currently ignores the actual preposition so that a text entry "charges on phone" will match a corresponding entry for "phone" in the dictionary. Once the grammar matching rules have been applied, the result is zero or more matches. If there are no matches, the tag recognition failed and the user is not provided with any tag. However, if there are multiple matches, a menu is presented to the user, as noted above, so that the user can chose among the ambiguous matches.

If either a single match was found or if the user chose one of the tags from the menu presented in the event that an ambiguity caused multiple matches to be detected, a property bag is created and the ID of the recognized instance is written to it. This property bag is committed to a Smart Tag recognizer site by the Smart Tag actions that are implemented with the productivity application.

In the actual example, a Smart Tag action handler receives the property bag and carries out the action by inserting the GL Code and description into the appropriate cells in the Expense Report spreadsheet. In carrying out this step, the GL Code that was recognized is returned and a GL Code description related to the GL Code is identified in a database, which in this embodiment, is the Smart Tag dictionary. Thus, both the GL Code and its user friendly description are inserted into the spreadsheet. It is also contemplated that a more sophisticated action handler could use the recognized instance for the selected Smart Tag to look up almost any kind of data in an SQL server database, and could then perform very complex actions defined by the data.

It is contemplated that other approaches could be used for parsing the text entered by a user to determine an appropriate instance or Smart Tag that should be returned for carrying out a particular action associated with the tag. One approach that might be preferable to that used in the current embodiment of the present invention would also employ a SMF dictionary. However, the operator creating the dictionary would only need to enter simple words and phrases in the dictionary, which would make the task of authoring the dictionary somewhat simpler. Instead of using grammar rules to determine when the two parse trees (one in the dictionary and one derived from the text entered by the user) match, this alternative approach would lock the two parse trees, counting the number of words that are common to both trees and awarding each parse tree thus checked a corresponding score. Any words found closer to the root of a tree would be given a higher rating. Trees in the dictionary with the highest number of matching words would be chosen, the instances or description of the instances for each tree having the same score would be presented to the user for resolution of the ambiguity if more than one matching tree had the same score. The advantage of this method would be the elimination of grammar rules and the ability to distinguish arbitrarily complex phrases from one another.

Although the present invention has been described in connection with the preferred form of practicing it and modifications thereto, those of ordinary skill in the art will understand that many other modifications can be made thereto within the scope of the claims that follow. Accordingly, it is not intended that the scope of the present invention in any way be limited by the above description, but instead be determined entirely by reference to the claims that follow.

## Claims

1. A method for initiating a action in regard to a document being accessed by a user in an application, comprising the steps of:
(a) parsing a text entry made by a user in the document to identify at least one linguistic component of the text entry;
(b) providing a plurality of tags, each of the plurality of tags having a action associated with it;
(c) comparing said at least one linguistic component to the plurality of tags to determine at least one tag that corresponds to each linguistic component; and
(d) carrying out the action associated with said at least one tag.

2. The method of Claim 1, wherein said at least one linguistic component corresponds to a subset of the plurality of tags, said subset including at least two tags, further comprising the step of displaying each tag in the subset to the user to enable the user to select the tag corresponding to the linguistic component, so that the action associated with the tag selected by the user is carried out.

3. The method of Claim 1, further comprising the steps of:
(a) determining a user dependent context as a function of an identity of a current user of the application; and
(b) enabling only specific tags to be accessible by the current user as a function of the user dependent context.

4. The method of Claim 1, further comprising the steps of:
(a) determining a use dependent context as a function of a current use of the document; and
(b) enabling only specific tags to be accessible by the current user as a function of the use dependent context.

5. The method of Claim 1, wherein the step of providing the plurality of tags comprises the steps of:
(a) specifying each of the plurality of tags as linguistic annotations and synonyms thereof;
(b) defining the actions associated with each of the plurality of linguistic annotations; and
(c) creating a tag catalog that includes the linguistic annotations, synonyms, and actions for the plurality of tags in a semantic modeling format.

6. The method of Claim 1, wherein the document comprises a predefined schema in which specific regions of the document are associated with a predefined group of tags.

7. The method of Claim 6, wherein a action associated with a tag provides input to another region of the predefined schema.

8. The method of Claim 1, wherein the step of parsing a text entry comprises the steps of:
(a) applying a natural language recognizer to the text entry to produce a normalized tree of the text entry;
(b) providing a dictionary that includes a plurality of instances that are returned in response to a match with the normalized tree, a plurality of single words associated with each of the plurality of instances, and a plurality of multiword phrases associated with each of the plurality of instances; and
(c) comparing the normalized tree of the text entry to the dictionary to determine at least one instance that will be returned as said at least one tag.

9. The method of Claim 8, wherein the dictionary also includes a description of each of the plurality of instances, further comprising the step of enabling the user to select a tag corresponding to an instance that should be used to carry out the action, from a plurality of possible tags that are presented to the user if a single tag is not determined by the step of comparing the normalized tree of the text entry to the dictionary.

10. The method of Claim 1, wherein the plurality of tags accessible by a user are dependent upon a role of the user in processing the document, further comprising the step of making different sets of tags accessible in the document when the document is opened in the application by users having different roles, each set of tags corresponding to a different role of the user in accessing the document.

11. The method of Claim 1, wherein the document is opened in the application on a client computing device and steps (b) and (c) are carried out on a server computing device.

12. The method of Claim 1, wherein the tags and actions associated therewith are maintained in a catalog on a server that is accessed by each of a plurality of users over a network

13. The method of Claim 1, further comprising the step of determining whether a location in the document in which the user has just entered text is associated with any of the plurality of tags.

14. A memory medium having machine readable instructions for carrying out steps (a), (c), and (d) of Claim 1.

15. A memory medium having machine readable instructions for enabling a user to carry out step (b) of Claim 1.

16. A method for automating actions in a document, based upon text entered in the document by a user, comprising the steps of:
(a) parsing the text entered in the document by the user to recognize any key words and key phrases included therein;
(b) identifying synonyms of key words recognized in the text entered by the user;
(c) comparing the key words, synonyms, and key phrases to words, and phrases included in a predefined dictionary;
(d) returning an instance for any corresponding match between any of a key word or synonym and a word in the dictionary, or between a key phrase and a phrase in the dictionary; and
(e) for an instance that is returned, causing an action associated with said instance to be implemented in the document.

17. The method of Claim 16, further comprising the step of displaying multiple instances to the user for any case in which the text entered by the user in the document causes multiple possible instances to be returned, to enable the user to select one of the multiple instances so that an action associated with said one of the multiple instances is implemented in the document.

18. The method of Claim 16, wherein the action associated with the instance that is returned causes an entry to be made in the document that is related to the text entry by the user.

19. The method of Claim 16, wherein the dictionary and the actions associated with the instances are contextually predefined, so that different instances and associated actions are included for each different class of user accessing the document.

20. The method of Claim 16, wherein the dictionary and the actions associated with the instances are contextually predefined, so that different instances and associated actions are included for each different type of document among a plurality of different types of documents.

21. The method of Claim 16, wherein the document is derived from a schema with which the dictionary is associated.

22. The method of Claim 16, wherein the step of parsing the text comprises the step of applying natural language grammar rules to the text entered by the user to identify the key words and key phrases.

23. The method of Claim 16, wherein the instance is associated with a description, further comprising the step of displaying the description to the user to enable the user to confine the instance, prior to implementing the action associated with the instance.

24. The method of Claim 16, further comprising the step of enabling the user to add additional words and phrases associated with specific instances to the dictionary to create a user lexicon.

25. The method of Claim 16, wherein the step of parsing is carried out by producing one or more parse trees for the text entered by the user, for comparison against corresponding parse trees included in the dictionary.

26. The method of Claim 16, wherein the instances and actions are maintained in a catalog on a server that is accessed by each of a plurality of users over a network.

27. A medium having machine readable instructions for carrying out steps of Claim 16.

28. A system for automating actions in a document, based upon text entered in the document by a user, comprising:
(a) a user input device enabling text input by a user;
(b) a display on which the document is displayed;
(c) a memory in which a plurality of machine instructions are stored; and
(d) a processing device coupled to the user input device, the memory, and the' display, said processing device executing the machine instructions, causing the processing device to carry out a plurality of functions, including:
(i) parsing the text entered in the document by the user to recognize any key words and key phrases included therein;
(ii) identifying synonyms of key words recognized in the text entered by a user;
(iii) comparing the key words, synonyms, and key phrases to words, and phrases included in a predefined dictionary;
(iv) returning an instance for any corresponding match between any of a key word or synonym and a word in the dictionary, or between a key phrase and a phrase in the dictionary; and
(v) for at least one instance that is returned, causing an associated action to be implemented in the document.

29. The system of Claim 28, wherein the machine instructions further cause the processing device to display multiple instances on the display for any case in which the text entered by a user in the document causes multiple possible instances to be returned, to enable a user to select one of the multiple instances and implement a action associated with said one of the multiple instances in the document.

30. The system of Claim 28, wherein the action associated with the instance causes the processing device to make an entry in the document that is related to the text entered in the document by a user.

31. The system of Claim 28, wherein the dictionary and the actions associated with the instances are contextually predefined, so that different instances and associated actions are included for each different class of user accessing the document.

32. The system of Claim 28, wherein the dictionary and the actions associated with the instances are contextually predefined, so that different instances and associated actions are included for each different type of document among a plurality of different types of documents.

33. The system of Claim 28, wherein the document is derived from a schema with which the dictionary is associated.

34. The system of Claim 28, wherein processing device parses the text by applying natural language grammar rules to the text entered by the user to identify the key words and key phrases.

35. The system of Claim 28, wherein the instance is associated with a description, and wherein the machine instructions further cause the processing device to display the description to the user to enable the user to confirm the instance, prior to implementing the action associated with the instance.

36. The system of Claim 28, wherein the machine instructions further cause the processing device to enable a user to add additional word and phrases associated with specific instances to the dictionary to create a user lexicon.

37. The system of Claim 28, wherein the processing device parses the text by producing one or more parse trees for the text entered by a user, for comparison against corresponding parse trees included in the dictionary.

38. The system of Claim 28, wherein the instances and actions are communicated from a remote site to the processing device over a network in a markup language format.

39. A method for specifying actions that will be carried out in a document in response to a text entry by a user in the document by returning a tag corresponding to the text, comprising the steps of:
(a) creating a dictionary that includes linguistic constructs and other metadata relating to natural text that can be entered by a user to activate tags from within the document;
(b) in respect to a template from which the document is produced, associating an action with each tag that can thus be activated;
(c) storing the tags and actions associated with the tags for the template in a catalog that is maintained at a site centrally accessible over a network by each of a plurality of users;
(d) enabling any of the plurality of users to produce the document based upon the template, using a productivity software application; and
(e) providing the dictionary, and the tags and the actions associated with the tags in respect to the template to a user who is working on the document in the productivity software application, to enable the text entered by the user to be recognized as corresponding to one of the tags, so that the action associated with said one of the tags is carried out in the document.

40. The method of Claim 39, further comprising the step of employing the linguistic constructs and other metadata in the dictionary to recognize text entered by the user as corresponding to at least one tag.

41. The method of Claim 40, wherein a plurality of prospective tags are recognized as possibly corresponding to the text entered by the user, further comprising the step of enabling the user to select a tag from among the plurality of prospective tags, so that the action associated with the tag thus selected is carried out in the document.

42. The method of Claim 39, wherein the tags and actions associated with the tags are context sensitive, responding to at least one of:
(a) a specific user who is currently working on the document;
(b) a role of the user who is currently working on the document; and
(c) a type of document.

43. A medium having machine readable instructions for carrying out the steps of Claim 39.

44. A system on which are specified actions that will be carried out in a document in response to a text entry by a user in the document by returning a tag corresponding to the text, comprising:
(a) a memory in which machine instructions and data are stored, said data including a plurality of tags and actions associated with the tags in regard to a template on which the document is based;
(b) a network interface that communicates with a plurality of remote computing devices over a network;
(c) a processing device that is coupled in communication with the memory and the network interface, said processing device executing the machine instructions stored in the memory to carry out a plurality of functions, including:
(i) enabling the tags and actions associated with the tags to be centrally maintained; and
(ii) enabling any of a plurality of remote computing devices to access and download the tags and actions associated with the tags over a network for use in carrying out the action associated with any tag that corresponds to text entered in the document.

45. The system of Claim 44, wherein the memory stores a dictionary of words and linguistic constructs relating to text that can be entered in the document and which correspond to the tags, said machine instructions further causing the processing device to transfer the dictionary to any of the plurality of remote computing devices that is accessing and downloading the tags and actions associated with the tags, said dictionary be usable to recognize the tag associated with the text.
